# EUROPÄISCHE PATENTSCHRIFT

(11) **EP 2 218 524 B1**
(45) Veröffentlichungstag und Bekanntmachung des Hinweises auf die Patenterteilung: **07.01.2015**
(21) Anmeldenummer: 09002014.0
(22) Anmeldetag: 13.02.2009
(51) Int. Cl.: C02F 3/00, B09B 3/00, C02F 11/04, C02F 11/12

(54) **Verfahren zur Verwertung von Haus- und Biomüll, und Abwasser und Vorrichtung zur Durchführung des Verfahrens**
Method for recycling household waste, biowaste and waste water and device for carrying out the method
Procédé de recyclage de déchets ménagers et biologiques, et eaux usées ainsi que dispositif destiné à l'exécution du procédé

(43) Veröffentlichungstag der Anmeldung: 18.08.2010
(73) Patentinhaber: Kahle, Hans Joachim, 26129 Oldenburg (DE)
(72) Erfinder: Kahle, Hans Joachim, 26129 Oldenburg (DE)
(74) Vertreter: Jabbusch, Matthias

(56) Entgegenhaltungen:
- WO-A-99/47473
- DE-A1- 3 626 885
- DE-A1-102005 051 111
- US-A1- 2004 002 028

## Beschreibung

Die Erfindung betrifft ein Verfahren zur Verwertung von Haus- und Biomüll und kommunalem Abwasser und eine Vorrichtung zur Durchführung des Verfahrens.

Die bisher zumeist getrennte Behandlung von Abfall- und Abwasserentsorgung verursacht hohe Verfahrenskosten und hohe Entsorgungskosten. Hausmüll ist die aufkommensstärkste Abfallart. Für die Abfall-Endlagerung sind große Deponiekapazitäten erforderlich, die in immer geringerem Maße zur Verfügung stehen. Bei den Deponien fallen hohe und nachhaltige Nachsorgekosten an, wie Sickerwasser- und andere Emissions-Überwachungsanlagen und Emissions-Gegenmaßnahmen.

Die Behandlung von Abfällen mit Wasser ist bekannt. So zeigt die WO 99/47 473-A1, die den Oberbegriff der Ansprüche 1 und 3 offenbart, die Aufspaltung von Abfällen mittels Wasser bzw. einer Waschflüssigkeit. Dies geschieht in zwei Behandlungsstufen. Die erste Behandlungsstufe ist als Wascheinrichtung ausgebildet, in welche die inerten und abrassiven Stoffe mittels einer Waschflüssigkeit ausgewaschen werden. Das verbleibende Feststoffgemisch wird der zweiten Behandlungsstufe zugeführt, die mit einer Hydrolysestufe und Hydrolyse-Filtrationszone zweistufig ausgebildet ist und ein oder zwei Reaktoren aufweist. Das daraus resultierende Feststoffgemisch wird einer stofflichen und/oder energetischen Verwertung zugeführt.

Weiter beschreibt die DE 10 2005 051 111-A1 das Auswaschen von Deponiekörpermaterial und Müll mit Waschwasser. Die resultierende feste Fraktion wird getrocknet und energetisch verwertet. Das beaufschlagte Waschwasser als flüssige Fraktion wird einem Waschwasserbehälter zugeführt, in dem sich Klärschlamm absetzt, mit dem die feste Fraktion während des Trockenprozesses beaufschlagt wird.

Der Erfindung liegt die Aufgabe zugrunde eine noch vorteilhaftere Verwertung von Müll und Abwasser aufzufinden.

In Lösung dieser Aufgabe ist ein Verfahren mit den Merkmalen des Patentanspruchs 1 und eine Vorrichtung mit den Merkmalen des Patentanspruchs 3 entwickelt worden. Weitere Merkmale des Verfahrens ergeben sich aus Anspruch 2.

Mit diesem Verfahren wird die Müllentsorgung in die Abwasserentsorgung integriert. Diesem Schritt liegt die Erkenntnis zugrunde, dass alle biologischen Abbauprozesse an die Gegenwart von Wasser gebunden sind. Die Biotechnologie des Abfalls ist damit grundsätzlich auch die des Abwassers.

Nach dem erfindungsgemäßen Verfahren wird die resultierende flüssige Fraktion biologischer Klärtechnik einer kommunalen Abwasserkläranlage zugeführt und die feste Fraktion einer biologischen Trocknung unterworfen. Ein wesentlicher Vorteil dieses Verfahrens besteht darin, dass der Müll bei gleichzeitiger weitgehender Zerkleinerung mit kommunalem Abwasser ausgewaschen wird, so dass alle mit dem Auswaschen gewonnenen biologischen Bestandteile den Klärstufen einer Kläranlage zugeführt werden können, während die festen Bestandteile, die die restlichen biologischen Anteile aufweisen, einer biologischen Trocknung zugeführt werden. Ein weiterer wesentlicher Vorteil besteht darin, dass für das Auswaschen des Mülls Reinwasser ersetzt wird durch kommunales Abwasser, wodurch Reinwasser eingespart wird, das in vielen Landschaften zunehmend in geringerem Maße zur Verfügung steht. Durch die nassmechanische Trennung des gelösten, überwiegend biogenen Materials aus dem Müll ergeben sich die weiteren Vorteile, das unter anderem nicht nur Deponiekapazitäten eingespart werden, sondern vorhandene Deponien unter Gewinnung von Wertstoffen, Energie und Deponieflächenreaktivierung auch abgebaut werden können.

Für die Müllwäsche sind neben dem verwendeten kommunalen Abwasser alle anderen Abwasser geeignet, wie Sickerwasser aus Deponien und sonstige Schmutzwasser, wie sie etwa aus Industrie und Handwerk anfallen. Die Einbindung kommunaler Abwasserkläranlagen ergibt als weitere Vorteile eine erhebliche Kostenersparnis, Investitionsvermeidung für den Bau und Betrieb mechanisch-biologischer Abfallbehandlungsanlagen, sowie die Ersparnis von damit einhergehenden Personalkosten und Flächen.

Hausmüll und Bioabfall und Abwasser haben einen hohen Kohlenstoffgehalt und stellen damit die Grundlage zur Gewinnung regenerativer Energien dar. Das erfindungsgemäße Verfahren bietet damit den Vorteil, dass aus dem gemeinsam aufbereiteten Müll und Abwasser Energie erzeugt werden kann. Der in der Klärtechnik anfallende Überschussschlamm wird einem Faulturm zur Gewinnung von Biogas zugeführt. Die zwei biologisch getrockneten festen Fraktionen (Abfall und herkömmlich konditionierter entwässerter Klärschlamm) des Verfahrens werden einem Blockheizkraftwerk zugeführt, in dem elektrischer Strom und Wärme erzeugt werden. Die erzeugte Wärme kann zum Teil als Prozesswärme zur Beschleunigung der biologischen Trocknung der festen Fraktion des Verfahrens zugeführt werden.

Gemäß der Erfindung, zeichnet sich eine Vorrichtung zum Aufbereiten von Müll, zur Durchführung des erfindungsgemäßen Verfahrens, durch die kennzeichnenden Merkmale des Anspruchs 3 aus.

Entsprechend der Menge des anfallenden Mülls können mehrere Waschtanks nebeneinander aufgestellt werden. Vorteilhaft ist der Einsatz mehrerer Waschtanks auch deshalb, weil dies eine der Anzahl der Waschtanks proportional flexible Prozess- wie auch Laststeuerung (wirkungsneutrale Stilllegung einzelner Waschtanks, etwa wegen Wartungsarbeiten, Niederschlagsereignisse, Auslastung von Lastsenken, etwa zu Mitternacht) erlaubt, wie auch eine Kapazitätsanpassung für die sich anschließenden Klärstufen. Dies wird erfindungsgemäß dadurch gestützt, dass die Waschtanks einzeln von einer Zentrale aus angesteuert werden können.

Ein Vorteil liegt auch darin, dass einzelne Waschtanks prozessneutral, etwa wegen Wartungsarbeiten (Auswechselung von Trommel, Waschtank selbst oder anderer Teile oder allgemeine Reparaturen), während des laufenden Betriebs der anderen Waschtanks aus dem laufenden Gesamtprozess entkoppelt werden können. Dies ist auch deswegen vorteilhaft, weil der Prozess pro Waschtank zwar ein Batchprozess ist, der Prozess aller Waschtanks sich indessen als angestrebter Kontiprozess für die sich anschließenden Klärstufen auswirkt. Zudem ergibt sich ein Vorteil dadurch, dass einzelne Waschtanks mit unterschiedlichen Abfallarten, etwa Deponiematerial, kontrolliert befüllt werden können ohne negativen biologischen Prozesseinfluss auf die Reinigungswirkung der jeweilig angeschlossenen Klärstufen. Die Verarbeitungskapazität und -Effizienz von solcherart "Fremdabfall" ist direkt proportional zur Anzahl der Waschtanks. Dies auch deswegen, weil unter anderem auch das biologisch abbauwirksame Verhältnis zwischen BSB (biochemischer Sauerstoffbedarf) und CSB (chemischer Sauerstoffbedarf) zentral leicht steuerbar ist in Form einer steuerbaren Abfallbefüllungs-[halb]automatik für die jeweils einzelnen Waschtanks.

Durch den wahlweise möglichen Stoffstrom des Waschwassers aus den Waschtanks entweder zurück in ein Rohabwassersammelbecken oder direkt in die Klärstufen wird eine hoch auflösende Lastfeinabstimmung bzw. entsprechende Auslastung der Klärstufen ermöglicht. Mit dieser Lastfeinabstimmung ist zudem auch eine auf die Optimierung der Biogasausbeute abgestimmte Gesamtlast bzw. Auslastung möglich. Dies wird gestützt durch die teilweise oder gänzliche Rückführung des Waschwassers in das Rohabwassersammelbecken. Diese Stoffstromlenkung bewirkt in jedem Falle nicht nur eine abbauwirksam hohe Mischungsgüte, sondern wirkt sich zudem als Pufferung gegebenenfalls toxischer Abwasserinhaltsstoffe aus den jeweiligen Chargen der Abfallwäsche aus auf dreierlei Weise, nämlich durch die dort bereits vorhandene mikrobielle Biomasse, durch die Verdünnung und durch die erfindungsgemäß verfahrensbedingt erhöhte C-Konzentration in dem dann zum Einsatz kommenden Abwasser.

Mit der Abfallwäsche und deren Stoffstromlenkung geht zudem auf der Flüssigseite nicht nur ein ständiger Import abfallbürtig adaptierter Mikroorganismen in die biologischen Klärstufen einher, die sich dort dann abbauwirksam auswirkt, sondern die Feinabstimmung erlaubt auch die Steuerung der Konzentration der verfahrenstechnisch geführten mikrobiellen Biomasse, sei es zur Auslastung vorhandener Klärkapazität oder sei es erforderlichenfalls zum Kapazitätsausbau der Klärstufen.

In der Waschtrommel wird der Müll zugleich zerkleinert und mit Hilfe des Abwassers ausgewaschen. Nach jedem Waschvorgang läuft das um die biologischen Anteile des Mülls angereicherte Waschwasser in die Klärtechnik. Der in der Waschtrommel befindliche zerkleinerte Müll wird auf ein endloses Sieb-Transportband geschüttet, wodurch in dem Müll noch vorhandene größere Wasseranteile durch das Sieb hindurch abtropfen können, und nachfolgend getrocknet.

Ausführungsbeispiele des Verfahrens und der Vorrichtung sind in den Zeichnungen dargestellt. Es zeigen:
- Fig. 1:: eine schematische Darstellung des Verfahrens nach einem ersten Ausführungsbeispiel,
- Fig. 2:: eine perspektivische Ansicht einer Müll-Waschanlage nach der Erfindung in Befüllstellung,
- Fig. 3:: eine perspektivische Ansicht der Müll-Waschanlage in der Entleerungsstellung,
- Fig. 4:: eine perspektivische Darstellung der Waschtrommel der Waschanlage,
- Fig. 5:: eine schematische Darstellung des Verfahrens nach einem zweiten Ausführungsbeispiel.

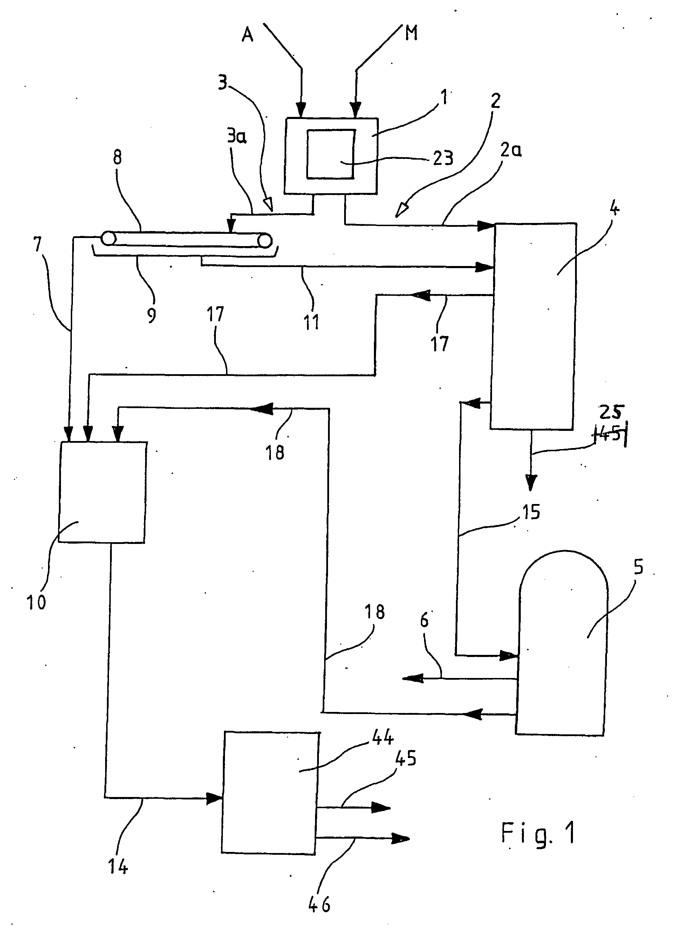

Gemäß Figur 1 wird in einem ersten Ausführungsbeispiel für Orte ohne Abwasserklärtechnik oder entsprechend entsorgungstechnischer Unterversorgung in einer erfindungsgemäßen speziell dafür konzipierten, eigenständigen Anlagentechnik, das anfallende Abwasser "A" in einen Waschtank 1 eingegeben und der anfallende Müll "M" in eine Waschtrommel 23 eingegeben, die sich in dem Waschtank befindet. In dem Waschtank wird der in der Waschtrommel befindliche Müll mit dem Abwasser vermischt und zerkleinert. Die aus dem Wasch- und Zerkleinerungsvorgang anfallende flüssige Fraktion 2, das Waschwasser, wird über eine Rohrleitung 2a einer Kläranlage 4 zugeführt, die in bekannter Weise die üblichen abwasserklärtechnisch nassmechanischen Trennstufen und wenigstens eine biologische Reinigungsstufe aufweist. Der in dieser Kläranlage anfallende Sekundärschlamm bzw. Überschussschlamm wird über eine Leitung 15 einem Faulturm 5 zugeführt, in dem in bekannter Weise Biogas 6 erzeugt wird.

Die aus dem Waschtank 1 anfallende feste Fraktion 3 wird über eine Leitung 3a auf ein endloses Sieb- und Transportband 8 geschüttet, auf dem aus der festen Fraktion restliches Waschwasser abtropfen kann. Das abgetropfte Waschwasser wird von einer unter dem Sieb-Transportband 8 angeordneten Abtropfrinne 9 aufgefangen und über eine Leitung 11 der Kläranlage 4 zugeführt. Von dem Sieb-Transportband 8 gelangt die feste Fraktion 3 über eine Transportlinie 7 in eine Anlage 10 zur biologischen Trocknung. Der biologischen Trocknung der festen Abfallfraktion wird aus der Kläranlage 4 über eine Leitung 17 Primärschlamm mit einem Trockensubstanzanteil von etwa 30 % zugeführt. Über eine Transportlinie 14 gelangt das getrocknete Material dann in ein Blockheizkraftwerk 44, in dem es thermisch verwertet wird, wodurch separat nutzbare Wärme 45 und Strom 46 erzeugt wird.

Der aus dem Faulturm 5 anfallende Klärschlamm wird nach klärtechnisch üblicher Konditionierung (- 30 % Trockensubstanz) über eine Leitung 18 gleichfalls dem in der Anlage 10 zur biologischen Trocknung befindlichen Material zugeschlagen. Die in dem Blockheizkraftwerk 44 anfallende Wärme wird teilweise zur Unterstützung der biologischen Trocknung dem in der Anlage 10 befindlichen Material zugeführt. Das in der Kläranlage 4 gewonnene Reinwasser ist mit 25 angedeutet.

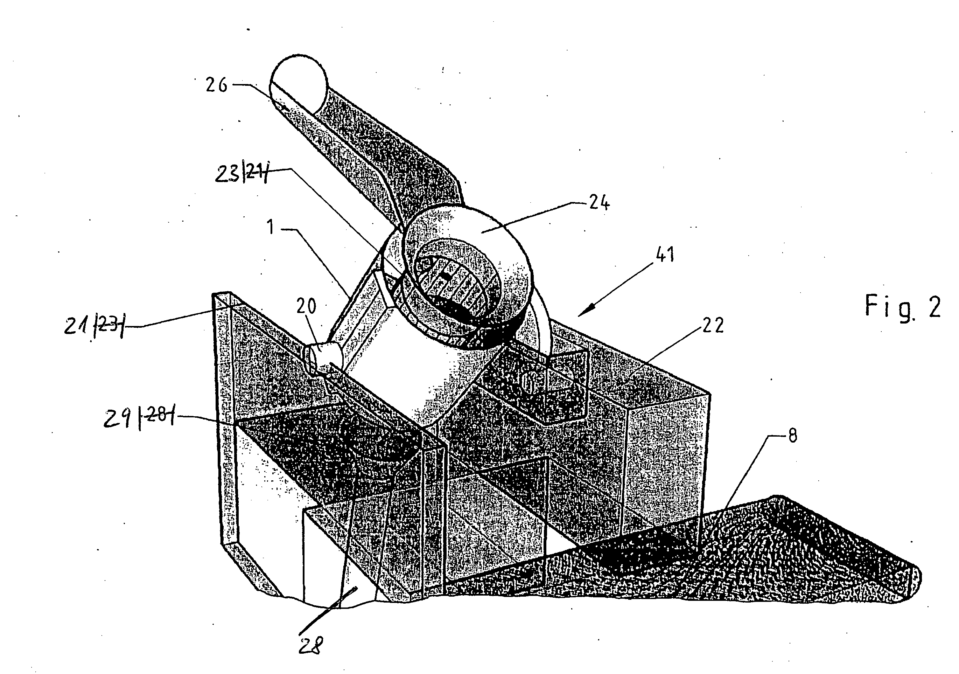

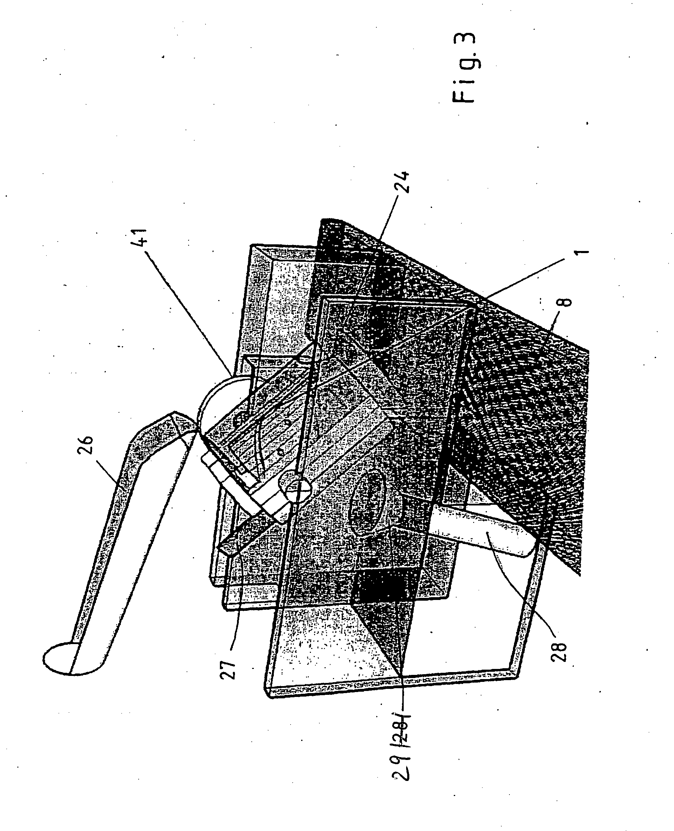

Die Figuren 2 und 3 zeigen einen Waschtank 1 mit einer darin koaxial und drehbar gelagerten Waschtrommel 23 zum Waschen des Mülls unter Hinzuführung von Abwasser in der Befüllungsstellung (Fig. 2) und in der Entleerungsstellung (Fig. 3). Die Waschtrommel 23 ist zylindrisch ausgebildet und hat koaxiale quer zu ihrer Längsachse verlaufende Schwenkachsen 20, mit denen sie zwischen zwei parallel zueinander verlaufenden Seitenwänden 21 und 22 der Anlage schwenkbar gelagert ist. Diese Seitenwände markieren zum einen die Trennung zum Nachbarwaschtank und zum anderen die erfindungsgemäß konzipierte funktionale Autonomie des Waschtanks, mithin den waschtankeigenen Waschbetrieb. Der Schwenkantrieb für den Waschtank 1 ist mit 41 bezeichnet. Der elektromechanische Antrieb für die Waschtrommel ist nicht dargestellt. Die Waschtrommel hat oben einen Einfülltrichter 24 zum Erleichtern des Einfüllens des Mülls. Die Hebevorrichtung, zum Beispiel eine Laufkatze mit beweglicher Kranbrücke, mit welcher der Müll in die Waschtrommel eingefüllt wird, ist nicht dargestellt. 26 ist eine Zulaufrinne für das Abwasser, durch die bei hochgeschwenktem Waschtank das Abwasser in die Waschtrommel eingefüllt wird. Der Waschwasserablauf des Waschtanks ist mit 27 bezeichnet. Bei hochgeschwenkter Stellung der Waschtrommel gemäß Figur 2 ragt der Waschwasserablauf 27 in den Einlauftrichter 29 eines Waschwasserableitungsrohrs 28 hinein, durch welches das Waschwasser in die Kläranlage 4 geleitet wird. Figur 3 zeigt den Waschtank 1 mit der Waschtrommel 23 in der abwärts gerichteten Schwenkstellung, in der der in der Waschtrommel zerkleinerte und gewaschene Müll auf das motorgetriebene, endlose Sieb-Transportband 8 geschüttet wird.

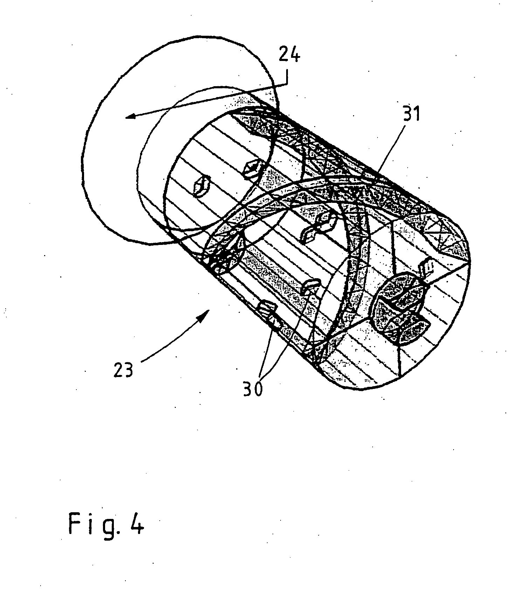

Figur 4 zeigt die Waschtrommel 23 schematisch und die Anordnung von Zerkleinerungselementen 30 an der Innenfläche der Waschtrommel. Diese und ähnliche Zerkleinerungselemente können auch als Schneiden ausgebildet sein. Durch die Element-Gruppen wird der Müll während der Drehbewegung der Waschtrommel fortlaufend zunehmend zerkleinert. Die Waschtrommel hat zahlreiche nicht dargestellte Öffnungen zum Austritt des Waschwassers in den Waschtank 1. Dabei kann die Waschtrommel als Käfig ausgebildet sein. Weiterhin sind an der Innenwandung der Waschtrommel schneckenförmig verlaufende Misch- und Förderschnecken 31 angeordnet, die eine ständige Umwälzung des in der Waschtrommel befindlichen Müll-Abwassergemischs während der Rotation der Waschtrommel bewirken. Diese Einbauelemente in der Waschtrommel befördern sämtlich das Waschen des Mülls mit dem in den Waschtank eingefüllten Abwasser, das als Waschwasser durch die zahlreichen Öffnungen in der Waschtrommel während des Waschvorganges aus der Waschtrommel austritt und damit in den Waschtank 1 gelangt.

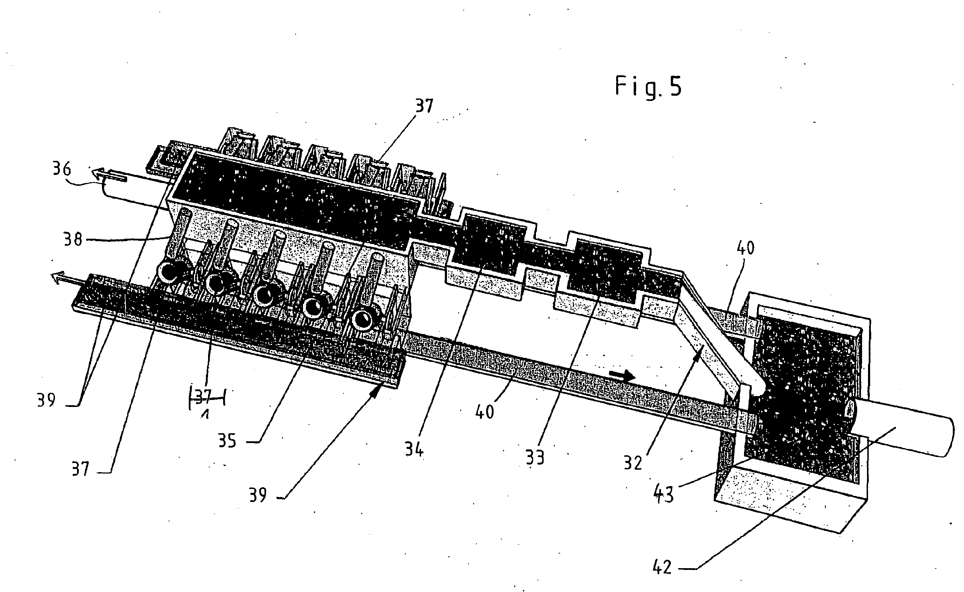

Figur 5 zeigt die Kombination einer Anlage gemäß Figuren 1 bis 4 mit einer herkömmlichen zuvor bereits im praktischen Betrieb befindlichen AbwasserKläranlage. Das Abwasser einer Kommune, gelangt wie üblich über eine Rohabwasser-Leitung 42 in das vorhandene Rohabwassersammelbecken 43 der Kläranlage. Aus dem Abwassersammelbecken wird das Abwasser über ein Hebewerk 32 stufenweise in bekannter Weise einem Rechen 33, einem Sandfang 34 und einem Vorklärbecken 35 zugeführt. Aus dem Vorklärbecken gelangt das Abwasser über eine Leitung 36 in eine nicht dargestellte wie üblich ausgeführte Abwasserreinigungsanlage, die etwa gemäß dem ersten Ausführungsbeispiel auch einen Faulturm zur Erzeugung von Biogas beinhaltet. In diese vorhandene Kläranlage ist das erfindungsgemäße Waschen des Mülls integriert. Dazu sind bei dem Ausführungsbeispiel zwei Gruppen 37 von je fünf Waschtanks 1 angeordnet, die mit integrierten Waschtrommeln so ausgebildet sind, wie in den Figuren 2, 3 und 4 beschrieben. Die Abwasserzuläufe zu den Waschtanks sind mit 38 bezeichnet. Wie in dem ersten Ausführungsbeispiel beschrieben, wird auch hier die feste Fraktion 3 nach dem Waschvorgang aus den Waschtrommeln auf je ein endloses Siebtransportband 39 geschüttet, von denen sie über eine biologische Trocknung 10 zu einem Blockheizkraftwerk befördert wird. Sowohl das aus den Waschtanks abfließende Waschwasser, als auch das von dem Siebtransportband 39 abtropfende Waschwasser werden über Rinnen 40 dem Rohabwassersammelbecken 43 und damit der vorhandenen Kläranlage zugeführt.

## Patentansprüche

1. Verfahren zur Verwertung von Haus- und Biomüll, und kommunalem Abwasser, wobei der Müll (M) mit dem Abwasser (A) gewaschen und zugleich zerkleinert wird, so dass das so erhaltene Gemisch in eine feste (3) und in eine flüssige Fraktion (2) aufgeteilt wird, die feste Fraktion zur nachfolgenden energetischen Verwertung einer biologischen Trocknung (10) unterworfen wird, die flüssige Fraktion einer kommunalen Abwasserkläranlage zugeführt und unter Erhalt von Klärschlamm biologisch gereinigt wird und dass der in der Abwasserkläranlage anfallende Überschussschlamm zur Erzeugung von Biogas einem Faulturm zugeführt wird,
**dadurch gekennzeichnet,**
**dass** das Waschen des Mülls (M) in eine bereits im Betrieb befindliche kommunale Kläranlage (4) integriert ist und die beim Waschen anfallende flüssige Fraktion (2) wahlweise entweder zurück in ein Rohabwassersammelbecken (43) oder direkt in die Klärstufen strömt.

2. Verfahren nach Anspruch 1, **dadurch gekennzeichnet, dass** der in den Klärstufen anfallende konditionierte Primärschlamm und der aus dem Faulturm anfallende konditionierte Klärschlamm der biologischen Trocknung der festen Fraktion zugeführt werden.

3. Vorrichtung zum Waschen von Haus- und Biomüll unter Verwendung von kommunalem Abwasser, geeignet zur Durchführung des Verfahrens gemäß den Patentansprüchen 1 und 2, wobei die Vorrichtung wenigstens einen Waschtank (1) mit einer darin drehbar gelagerten Waschtrommel (23) aufweist, der Waschtank (1) einen Abwasser-Zulauf (38) und einen Waschwasser-Ablauf (27) hat, wobei dieser mit einer kommunalen Kläranlage verbunden ist, die über einen Faulturm zur Biogasgewinnung verfügt, dass der Waschtrommel (23) eine Waschtrommel-Befülleinrichtung für den Müll zugeordnet ist, der nach dem Waschvorgang als feste Fraktion (3) einer biologischen Trocknung (10) zuführbar ist, **dadurch gekennzeichnet, dass** die Vorrichtung in eine zuvor bereits im Betrieb befindliche kommunale Kläranlage integriert ist und der Waschwasser-Ablauf (27) mit einem Rohabwassersammelbecken (43) oder den Klärstufen direkt verbunden ist und dass die Waschtrommel (23) innenseitig angeordnete Zerkleinerungselemente (30) aufweist, und der Waschtank (1) mit der Waschtrommel (23) mit Hilfe eines Schwenkantriebs (41) um eine quer zu ihrer Längsachse verlaufende Schwenkachse (20) von einer aufwärts gerichteten Befüllstellung in eine abwärts gerichtete Entleerungsstellung schwenkbar ist.

## Claims

1. A method for utilising domestic and biodegradable waste and communal waste water, in which the waste (M) is washed with the waste water (A) and comminuted at the same time, so that the mixture obtained in this manner is divided into a solid (3) and a liquid fraction (2), the solid fraction is subjected to the subsequent energetic utilisation of a biological drying process (10), the liquid fraction is fed to a communal waste water treatment plant and is biologically cleaned, producing sludge, and that the excess sludge produced in the waste water treatment plant is fed to a digestion tank to produce biogas,
**characterised in that**
the washing of the waste (M) is integrated into a communal waste water treatment plant (4) that is already in operation, and the liquid fraction (2) produced during washing either flows back into a raw waste water collection tank (43) or directly into the waste water treatment stages.

2. A method according to Claim 1, **characterised in that** the conditioned primary sludge produced in the waste water treatment stages and the conditioned sludge produced from the digester tank are fed to the biological drying process of the solid fraction.

3. A device for washing domestic and biodegradable waste using communal waste water, suitable for carrying out the method according to Patent Claims 1 and 2, wherein the device has at least one washing tank (1) having a washing drum (23) mounted rotatably therein, the washing tank (1) has a waste water outlet (38) and a washing water outlet (27), the latter being connected to a communal waste water plant that has a digester tank for biogas production, that the washing drum (23) is assigned a washing drum filling apparatus for the waste, which can be fed as a solid fraction (3) to a biological drying process (10), **characterised in that** the device is integrated into a communal waste water treatment plant that is already in operation, and the washing water outlet (27) is directly connected to a raw waste water collection tank (43) or the waste water treatment stages, and that the washing drum (23) has comminution elements (30) arranged on the inside, and the washing tank (1) with the washing drum (23) can be pivoted with the aid of a pivoting drive (41) about a pivot axis (20) running transversely to the longitudinal axis of the washing drum from a filling position oriented upwards to an emptying position oriented downwards.

## Revendications

1. Procédé pour le recyclage de déchets ménagers et biologiques et d'eaux usées municipales, dans lequel les déchets (M) sont lavés avec l'eau usée (A) et simultanément broyés, de telle façon que le mélange ainsi obtenu est divisé en une fraction solide (3) et une fraction liquide (2), la fraction solide étant soumise à un séchage biologique (10) en vue d'un recyclage énergétique consécutif, la fraction liquide étant transportée vers une station d'épuration d'eaux usées municipale et nettoyée biologiquement avec obtention de boues d'épuration, et de telle façon que la boue excédentaire présente dans la station d'épuration d'eaux usées est transportée vers une tour de fermentation pour la production de biogaz,
**caractérisé en ce que**
le lavage des déchets (M) est intégré dans une station d'épuration (4) municipale déjà en activité, et la fraction liquide (2) apparaissant pendant le lavage peut au choix être renvoyée vers un bassin de collecte d'eaux usées brutes (43) ou s'écouler directement dans les étages d'épuration.

2. Procédé selon la revendication 1, **caractérisé en ce que** la boue primaire conditionnée dans les étages d'épuration et la boue d'épuration conditionnée du séchage biologique venant de la tour de fermentation sont ajoutées à la fraction solide.

3. Dispositif pour le lavage de déchets ménagers et biologiques en utilisant des eaux usées municipales, adapté pour l'exécution du procédé selon les revendications 1 et 2, le dispositif comportant au moins une réservoir de lavage (1) avec un tambour de lavage (23) monté de façon rotative dans celui-ci, le réservoir de lavage (1) possédant une arrivée d'eau usée (38) et une évacuation d'eau usée (27), cette dernière étant reliée à la station d'épuration municipale, laquelle dispose d'une tour de fermentation pour l'obtention de biogaz, en ce qu'un dispositif de remplissage de tambour de lavage est attribué au tambour de lavage (23), pour les déchets susceptibles d'être soumis à un séchage biologique (10) en tant que fraction solide (3) suite à l'opération de lavage, **caractérisé en ce que** le dispositif est intégré dans une station d'épuration municipale déjà en activité, et **en ce que** l'évacuation d'eau usée (27) est reliée à un bassin de collecte d'eaux usées brutes (43) ou directement aux étages d'épuration, et **en ce que** le tambour de lavage (23) comporte des éléments de broyage (30) agencés du côté intérieur, et **en ce que** le réservoir de lavage (1) avec le tambour de lavage (23) peut être pivoté autour d'un axe de pivotement (20) s'étendant perpendiculairement à son axe longitudinal, d'une position de remplissage orientée vers le haut vers une position de vidage orientée vers le bas, à l'aide d'un entraînement de pivotement (41).
